# FASCICULE DE BREVET EUROPEEN

(11) **EP 3 529 181 B1**
(45) Date de publication et mention de la délivrance du brevet: **24.02.2021**
(21) Numéro de dépôt: 17797682.6
(22) Date de dépôt: 20.10.2017
(51) Int. Cl.: B65G 47/14, B65G 51/03

(54) **AGENCEMENT POUR TASSER DES PREFORMES EN FILE DANS UN CONVOYEUR**
ANORDNUNG ZUM ZUSAMMENPRESSEN VON WARTESCHLANGENVORFORMEN IN EINER FÖRDERVORRICHTUNG
ARRANGEMENT FOR PRESSING TOGETHER QUEUING PREFORMS IN A CONVEYOR

(30) Priorité: 20.10.2016 FR 1660173
(43) Date de publication de la demande: 28.08.2019
(73) Titulaire: Sidel Participations, 76930 Octeville-sur-Mer (FR)
(72) Inventeur: DOUDEMENT, Denis, 76930 Octeville-sur-mer (FR); DEBRIS, Anthony, 76930 Octeville-sur-mer (FR); WILLIG, Frédéric, 76930 Octeville-sur-mer (FR); MAZO, Eric, 76930 Octeville-sur-mer (FR)
(74) Mandataire: Sidel Group
(86) Numéro de dépôt international: PCT/FR2017/052894
(87) Numéro de publication internationale: WO 2018/046873

(56) Documents cités:
- EP-A1- 0 645 323
- EP-A1- 0 837 017
- EP-A1- 2 048 097
- WO-A1-01/04029
- FR-A1- 3 028 254
- JP-A- 2009 107 838
- US-A- 3 392 816
- US-A- 3 910 407
- US-A- 5 421 678
- US-A1- 2012 315 123

## Description

### DOMAINE TECHNIQUE DE L'INVENTION

L'invention concerne un agencement pour tasser des préformes en file en aval de la sortie d'un dispositif de redressement et d'alignement de préformes, notamment de préformes en matériau thermoplastique destinées à être conformées en récipient final par une station de formage.

### ARRIERE PLAN TECHNIQUE DE L'INVENTION

L'agencement est destiné à être mis en œuvre dans une installation de fabrication de récipients en matériau thermoplastique et notamment en polyéthylène téréphtalate (PET) par formage, notamment par soufflage ou étirage-soufflage, de préformes. Une telle installation permet de produire des récipients en très grande série à des cadences très élevées, par exemple supérieures à 85000 bouteilles par heure.

Selon une technique bien connue, de tels récipients sont produits en deux étapes principales. Dans une première étape, on procède au moulage par injection d'une préforme en PET. Cette préforme comporte un corps sensiblement tubulaire qui est fermé à l'une de ses extrémités axiales, l'extrémité opposée étant ouverte par l'intermédiaire d'un col. Le col présente, dès cette opération de moulage par injection, la forme définitive du col du récipient. Généralement, le col du récipient comporte un filetage.

La préforme comporte généralement une face annulaire de support qui fait saillie radialement vers l'extérieur par rapport au reste du corps et qui est orientée axialement vers l'extrémité fermée du corps. Une telle face de support est par exemple portée par une collerette de support annulaire qui s'étend radialement en saillie vers l'extérieur par rapport au reste de la préforme et qui est située à la base du col.

Il existe des installations dans lesquelles les préformes, une fois injectées, sont directement transmises vers la station de formage, chaque préforme étant transportée individuellement.

Toutefois, dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

Dans le cas où la station d'injection et l'installation de fabrication par formage sont deux machines totalement indépendantes, les préformes sont généralement livrées en vrac. La station de soufflage dispose donc d'un dispositif d'alimentation en préformes qui est équipé d'un dispositif d'alignement en une file et de redressement des préformes. La présente invention concerne un agencement destiné à compléter un tel dispositif, en étant disposé en aval, c'est-à-dire au-delà, de la sortie d'un tel dispositif, donc entre ce dispositif et la machine de soufflage.
FR3028254A1 divulgue un agencement selon le préambule de la revendication 1.

La présente invention concerne plus particulièrement un dispositif d'alignement et de redressement de préformes dans lequel les préformes ne sont pas indexées en position. La plupart du temps, les préformes sortent en file serrée, chaque préforme étant en contact avec la préforme suivante. Ceci permet de garantir une alimentation efficace des stations de traitement suivante.

Cependant, il arrive que les préformes de la file sortante ne soient pas au contact les unes des autres. Il se crée alors un trou qui est susceptible de perturber l'alimentation des stations suivantes. Le rendement de l'installation de fabrication est alors susceptible de baisser.
Par ailleurs, le document EP0645323 décrit un systeme de convoyage pour bouteilles.

### BREF RESUME DE L'INVENTION

La présente invention concerne un agencement selon la revendication 1.

L'invention permet donc que les préformes, après avoir été accélérées, se retrouvent freinées par les brosses du convoyeur à brosses et viennent se tasser en ligne entre les brosses.

Selon d'autres caractéristiques de l'invention :
- le dispositif de redressement et d'alignement comporte un bol de centrifugeuse dans lequel les préformes redressées et alignées sont reçues suspendues dans un interstice délimité entre la périphérie d'un plateau tournant et une rambarde extérieure et le long duquel elles se déplacent librement, les préformes sortant par un passage de sortie réalisé dans la rambarde ;
- le convoyeur à gaz comporte des rails rectilignes positionnés dans le prolongement du passage de sortie et jusqu'au convoyeur à brosses entre lesquels les préformes sont reçues glissantes, et il comporte une rampe d'évents dont chacun projette un jet de gaz vers des préformes portées glissantes pour les pousser vers le convoyeur à brosses ;
- la rampe d'évents s'étend au moins en partie sur une portion finale en arc de cercle du trajet des préformes autour du plateau pour pousser les préformes vers le passage de sortie ;
- l'écartement des rails rectilignes du convoyeur à gaz est susceptible d'être réglés en fonction de la dimension des préformes ;
- les rails rectilignes sont écartés symétriquement par rapport à un axe vertical médian ;
- la largeur de l'interstice entre la périphérie du plateau tournant et la rambarde est susceptible d'être réglé par modification du diamètre du plateau tournant ;
- l'agencement comporte des rails de bifurcation qui raccordent l'interstice du dispositif d'alignement et de redressement avec les rails rectilignes à travers le passage de sortie, les rails de bifurcation étant incurvés selon une courbure opposée à celle de ladite portion finale ;
- les rails de bifurcation sont susceptibles d'être remplacés pour adapter leur rayon de courbure et leur écartement en fonction de la dimension des préformes sortantes.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente schématiquement un dispositif d'alignement et de redressement de préformes comportant un bol de centrifugeuse comportant un convoyeur à brosses ;
- la figure 2 est une vue de face qui représente une préforme utilisée avec le dispositif de la figure 1, l'axe de la préforme étant ici orienté verticalement ;
- la figure 3 est une vue de dessus qui représente le bol de centrifugeuse de la figure 1 ;
- la figure 4 est une vue en coupe radiale d'un secteur d'alignement du bol de centrifugeuse de la figure 1 qui représente la rambarde périphérique et le plateau tournant du bol de centrifugeuse ainsi qu'une préforme alignée ;
- la figure 5 est une vue en perspective qui représente un déversoir du dispositif de la figure 1 ;
- la figure 6 est une vue de dessus qui représente une partie du secteur d'alignement du bol de centrifugeuse, ainsi que les différentes étapes du parcours d'une préforme déversée dans le bol de centrifugeuse ;
- la figure 7 est une vue en coupe radiale d'un secteur de redressement du bol de centrifugeuse de la figure 1 qui représente la rambarde périphérique et le plateau tournant du bol de centrifugeuse ainsi qu'une préforme alignée et redressée ;
- la figure 8 est une vue schématique selon une direction radiale qui représente une préforme alignée le long de la rambarde dans le secteur d'alignement du bol de centrifugeuse de la figure 1 ;
- la figure 9 est une vue de dessus de la figure 8 ;
- la figure 10 est une vue similaire à celle de la figure 8 qui représente la préforme de la figure 8 en cours de redressement au début du secteur de redressement du bol de centrifugeuse de la figure 1 ;
- la figure 11 est une vue de dessus de la figure 10 ;
- la figure 12 est une vue similaire à celle de la figure 10 qui représente la préforme de la figure 10 redressée dans le secteur de redressement du bol de centrifugeuse de la figure 1 ;
- la figure 13 est une vue de dessus de la figure 12 ;
- la figure 14 est une vue de dessus qui représente la sortie du bol de centrifugeuse, des rails de guidage d'un convoyeur à gaz et l'entrée du convoyeur à brosses ;
- la figure 15 est une vue de dessus qui représente le convoyeur à brosses accouplé à la roue de transfert ;
- la figure 16 est une vue de dessus qui représente le bol centrifugeuse, le convoyeur à gaz et le convoyeur à brosses ;
- la figure 17 est le bol de centrifugeuse raccordé un convoyeur à brosses par l'intermédiaire du convoyeur à gaz qui est plus détaillé dans une vue éclatée ;
- la figure 18 est une vue dessous du convoyeur à gaz ;
- la figure 19 est une vue en coupe radiale de la figure 16 du convoyeur à gaz avec le positionnement des préformes ;

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations locales suivantes pour chaque préforme présente dans le bol de centrifugeuse du dispositif :
- radiale "R" dirigée de l'intérieur vers l'extérieur depuis l'axe de rotation du plateau tournant ;
- tangentiel "T" qui est orthogonale à la direction radiale "R" et qui s'étend dans le plan du plateau tournant, dirigée d'amont en aval selon le sens de rotation du plateau tournant ;
- verticale "V" dirigée de bas en haut selon le sens inverse de la gravité terrestre.

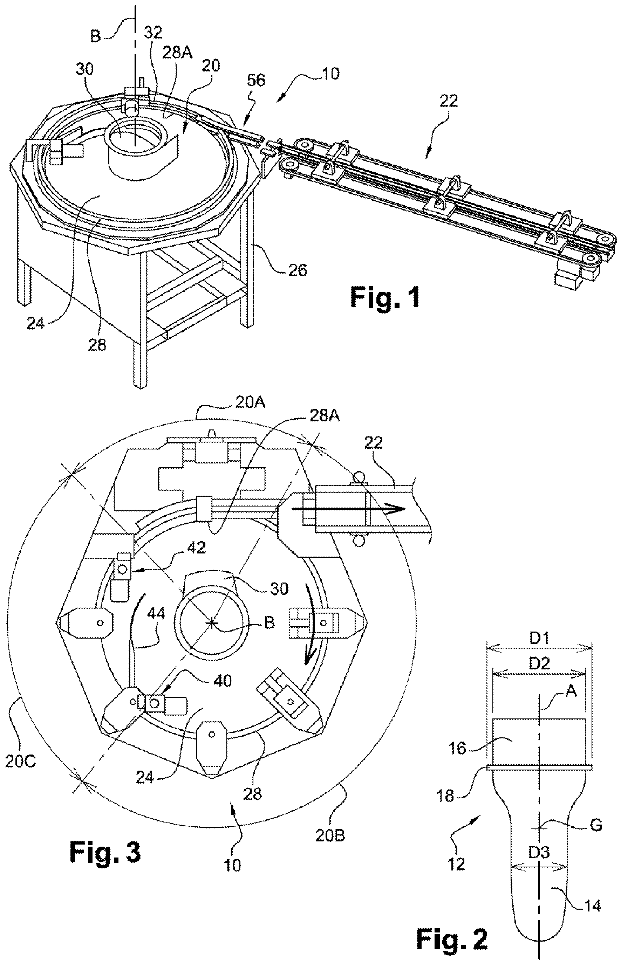

On a représenté à la figure 1 un dispositif 10 d'alignement en une file et de redressement de préformes 12 destiné à faire partie d'une installation (non représentée) de fabrication de récipient en matériau thermoplastique par formage, notamment par soufflage ou par étirage-soufflage.

Un exemple de préforme 12 destinée à être utilisée avec le dispositif 10 est illustré à la figure 2. Une telle préforme 12 est réalisée en matériau thermoplastique, ici en PET. Elle est classiquement obtenue par moulage par injection. Elle présente une forme sensiblement axisymétrique autour d'un axe "A" principal représenté verticalement à la figure 2.

Elle comporte un corps 14 en forme de tube allongé selon l'axe "A" principal présentant une extrémité axiale fermée et qui présente à son extrémité opposée, représenté en haut à la figure 2, un col 16 ouvert axialement.

La préforme 12 comporte aussi une face 18 de support annulaire, aussi appelée collerette, qui est orientée axialement vers l'extrémité fermée de la préforme 12, qui fait saillie radialement par rapport au reste du corps 14, et qui est agencée au-dessus d'un centre "G" de gravité de la préforme 12. Le terme "annulaire" signifie que la face de support fait le tour de la préforme 12 soit de manière continue, soit de manière discontinue. Dans ce dernier cas, la face annulaire est par exemple formée de segments disjoints qui font le tour de la préforme 12 qui sont néanmoins suffisamment rapprochés pour que la préforme 12 puise être soutenue entre deux supports diamétralement opposés quelle que soit la position de la préforme 12 autour de son axe principal.

Dans l'exemple représenté, la base du col 16, à la jonction avec le corps 14, présente une collerette qui s'étend radialement en saillie par rapport au reste de la préforme 12. La face inférieure de la collerette forme ainsi ladite face 18 de support.

En variante, la collerette peut être disposée ailleurs qu'à la base du col, par exemple au niveau du buvant.

Selon une autre variante, la face de support est par exemple formée par une face inférieure d'un filetage du col.

Selon encore une autre variante, la face de support est rapportée sur la préforme 12, par exemple par l'intermédiaire d'un bouchon.

Le diamètre "D1" externe de la face 18 de support, dans le cas présent de la collerette, est ainsi supérieur au diamètre "D2" externe maximal du corps 14. Dans l'exemple représenté à la figure 2, le tronçon d'extrémité fermée du corps 14 présente ici un diamètre "D3" externe minimal.

Le col 16 présente sa forme définitive, tandis que le corps 14 est destiné à être étiré lors d'une opération ultérieure de formage pour former le corps du récipient fini. A cet effet, l'installation est équipée d'une station de chauffage qui est placée en aval du dispositif 10 d'alignement et de redressement.

En outre, le poids du corps 14 des préformes 12 utilisées est supérieur au poids du col 16, incluant celui de la collerette. Ainsi, le centre "G" de gravité de la préforme 12 est situé sous la face 18 de support en référence à la figure 2. Ainsi, une préforme 12 soutenue par sa face 18 de support en reposant sur deux supports diamétralement opposés s'orientera naturellement par gravité col 16 en haut.

L'exemple représenté à la figure 2 est non limitatif. On comprendra que le dispositif 10 et le procédé associé sont destinés à être appliqué à tout type de préformes 12 présentant une face 18 de support faisant saillie radialement par rapport au reste du corps 14, et présentant un centre de gravité décalé axialement vers le corps par rapport à ladite face 18 de support.

En revenant à la figure 1, le dispositif 10 comporte principalement un bol 20 de centrifugeuse ainsi qu'un convoyeur 22 de sortie des préformes 12 alignées et redressées.

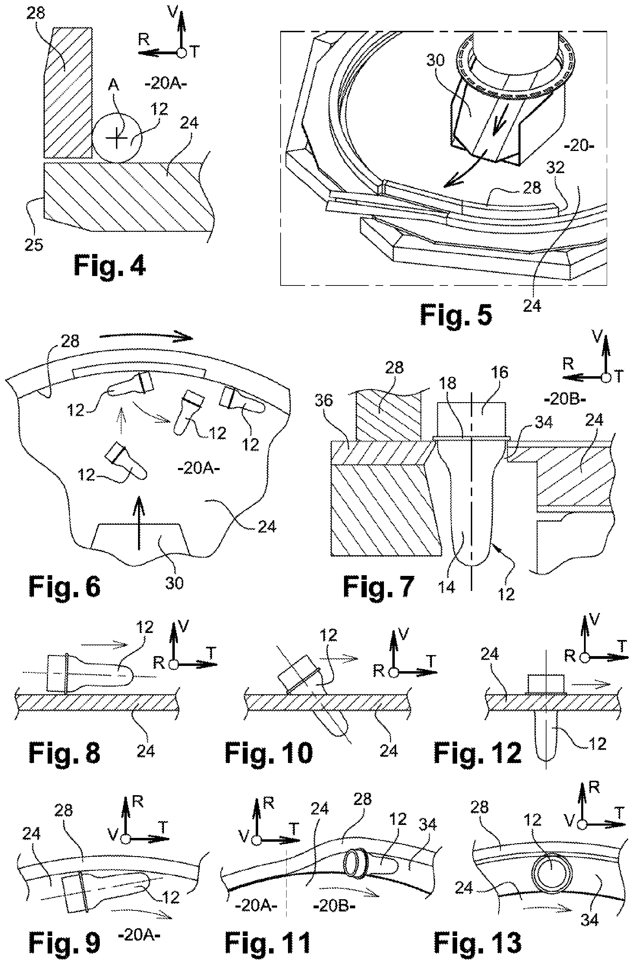

Le bol 20 de centrifugeuse comporte un plateau 24 circulaire horizontal tournant autour d'un axe "B" vertical central. Le plateau 24 tournant présente ainsi un bord 25 extérieur circulaire représenté à la figure 4. La face supérieure du plateau 24 tournant délimite verticalement vers le bas l'intérieur du bol 20 de centrifugeuse. Ainsi, le plateau 24 forme le fond du bol 20.

Le plateau 24 tournant présente un diamètre externe très supérieur aux dimensions des préformes 12.

Le plateau 24 tournant peut être entraîné en rotation à un régime constant, ici dans un sens horaire en vue de dessus, par exemple par un moteur (non représenté) qui est situé sous le plateau 24 tournant. La vitesse de rotation est par exemple commandée de manière que le bord 25 extérieur du plateau 24 tournant se déplace entre 2 et 3 m/s.

Cependant, la vitesse de rotation du plateau 24 tournant peut être régulée en fonction de la quantité de préformes accumulées dans le convoyeur de sortie. Cette quantité de préformes est par exemple détectée par des capteurs se trouvant dans le convoyeur de sortie. Ainsi, si le niveau de préformes dans le convoyeur de sortie n'est pas suffisant pour alimenter une unité se trouvant après le convoyeur de sortie, par exemple un four de chauffage de préformes, alors la vitesse de rotation du plateau 24 est augmentée, ainsi que le débit de préformes alimentant le plateau 24 tournant par l'intermédiaire du déversoir 30.

Le plateau 24 tournant est ici porté par une table 26 de support. La table 26 de support présente des pieds qui sont avantageusement réglable en hauteur pour permettre de régler l'assiette du plateau 24 tournant.

Le bol 20 de centrifugeuse est délimité radialement vers l'extérieur par une rambarde 28 périphérique fixe qui est ici fixée à la table 26 de support. Cette rambarde 28 a notamment pour première fonction de retenir les préformes 12 projetées vers l'extérieur par la force centrifuge produite par la rotation du plateau 24 tournant, et pour deuxième fonction de guider le déplacement des préformes 12 jusqu'à un passage 32 de sortie du bol 20.

Les préformes 12 sont destinées à être déversées en vrac sur le plateau 24 tournant par l'intermédiaire d'un déversoir 30 fixe. Le déversoir 30 est ici au centre du plateau 24 tournant. Le déversoir 30 est conçu pour déverser les préformes 12 en vrac, radialement en direction d'une portion 28A de réception de la rambarde 28. Le déversoir 30 se présente ici sous la forme d'un toboggan alimenté en préformes 12 par le haut par l'intermédiaire d'un tapis élévateur (non représenté). Le haut du déversoir 30 présente néanmoins une hauteur relativement faible, par exemple à environ 40 cm au-dessus du plateau 24.

Comme cela est illustré à la figure 3, pour les besoins de la description, on divisera le bol en trois zones fixes par rapport à la table 26, chacune formée par un secteur angulaire s'étendant autour de l'axe "B" du plateau 24 tournant.

Un premier secteur 20A angulaire dit d'alignement des préformes 12 s'étend face à la sortie du déversoir 30. Ce secteur 20A angulaire d'alignement inclut la portion 28A de réception de la rambarde 28.

Un deuxième secteur 20B angulaire de redressement des préformes 12 alignées est situé directement en aval du premier secteur 20A angulaire d'alignement. De manière non limitative, il s'étend ici globalement sur 180°.

Un troisième secteur 20C angulaire de triage des préformes 12 incorrectement alignées est prévu directement en aval du deuxième secteur 20B angulaire de redressement et directement en amont du premier secteur 20A angulaire d'alignement. A l'extrémité aval de ce secteur 20C de triage, le passage 32 de sortie des préformes 12 est ouvert dans la rambarde 28 pour permettre de guider les préformes 12 correctement alignées et redressées vers le convoyeur 22 de sortie.

La dénomination de chacun de ces secteurs 20A, 20B, 20C fournit une indication sur leur fonction. On comprendra par la suite que des préformes 12 non alignées au niveau du premier secteur 20A d'alignement peuvent néanmoins être alignées et redressées au niveau du deuxième secteur 20B angulaire selon les circonstances.

Sur toute la périphérie du premier secteur 20A angulaire d'alignement, un jeu de fonctionnement est réservé entre la rambarde 28 et le plateau 24 tournant. Ce jeu permet la rotation du plateau 24 tournant, mais il est toutefois suffisamment faible pour permettre à la rambarde 28 de retenir la totalité de la préforme 12 à l'intérieur du bol 20. Ce jeu est ainsi inférieur au diamètre "D3" minimal du corps 14 de la préforme 12.

Comme représenté à la figure 4, sur ce secteur 20A d'alignement, la rambarde 28 s'étend verticalement au-dessus du plateau 24 tournant, de manière que le bord 25 externe du plateau 24 tournant est disposé à l'extérieur du bol 20 de centrifugeuse.

Lors du fonctionnement du dispositif 10, comme représenté aux figures 5 et 6, lors d'une première étape de déversement, les préformes 12 déversées en vrac par le déversoir 30 sont projetées radialement contre une portion 28A de réception de la rambarde 28 sous l'effet conjugué de leur vitesse radiale de glissement en sortie du déversoir 30 et de la force centrifuge produite par la rotation du plateau 24 tournant. Dans le même temps, le plateau 24 tournant commence aussi à entraîner dans sa rotation les préformes 12 tangentiellement vers l'aval.

Lors d'une deuxième étape d'alignement, les préformes 12 sont maintenues à l'intérieur du bol 20 par la rambarde 28, puis, après un ou plusieurs rebonds contre la rambarde 28, les préformes 12 perdent progressivement de la vitesse selon la direction radiale. Elles sont alors constamment maintenues radialement contre la rambarde par la force centrifuge. On a représenté le trajet suivi par une même préforme 12 à la figure 6 depuis son arrivée via le déversoir 30 jusqu'à sa position stable contre la rambarde 28. Les préformes 12 sont alors entraînées en déplacement purement tangentiel dans un sens horaire par le plateau 24 tournant le long de la rambarde 28.

Dans cette configuration, les préformes 12 occupent naturellement la position la plus stable dans laquelle leur axe "A" principal est orienté selon une direction tangente par rapport au plateau 24 tournant.

La plupart des préformes 12 présentes dans le secteur 20A angulaire d'alignement du bol 20 sont ainsi alignées tangentiellement contre la rambarde 28, leur axe "A" principal étant orienté sensiblement tangentiellement à leur direction de déplacement. L'écart tangentiel entre deux préformes 12 alignées successives est aléatoire car le plateau 24 tournant est parfaitement plan et ne présente pas de crans d'indexation des préformes 12. Les préformes 12 peuvent ainsi être en contact par leurs extrémités sous l'effet de la force centrifuge qui oblige les préformes 12 à glisser les unes par rapport aux autres. Les préformes 12 occupent ainsi de manière optimal toute la longueur périphérique du bol 20.

A ce stade, les préformes 12 sont orientées aléatoirement col vers l'amont ou vers l'aval sans incidence pour la suite du procédé. Les préformes 12 ainsi alignées poursuivent leur déplacement périphérique dans le secteur 20B de redressement.

Le fait que les préformes 12 soient maintenues sur le plateau 24 tournant permet de les maintenir plaquées radialement contre la rambarde 28. Ainsi, les préformes 12 sont guidées de manière stable par la rambarde 28 durant leur déplacement autour du bol 20.

Comme représenté à la figure 7, sur le deuxième secteur 20B angulaire de redressement du bol 20 de centrifugeuse, le bol 20 présente un interstice 34 périphérique formé par écartement radial de la rambarde 28 par rapport au bord 25 externe du plateau 24 tournant. La largeur radiale de l'interstice 34 est comprise entre le diamètre "D2" maximal du corps 14 et le diamètre "D1" de la face 18 de support, dans le cas présent de la collerette. Cet interstice 34 se prolonge jusqu'au passage 32 de sortie des préformes 12.

Au moins tout le long du deuxième secteur 20B de redressement, la rambarde 28 présente un rail 36 fixe de support de la face 18 de support. Le rail 36 fixe s'étend en saillie radialement vers l'intérieur au même niveau que la face supérieure du plateau 24 tournant pour délimiter l'interstice 34 vers l'extérieur. Le rail 36 fixe se prolonge ici jusqu'au passage 32 de sortie.

Ainsi, les préformes 12 sont susceptibles d'être soutenues par leur face 18 de support, dans le cas présent par leur collerette, qui repose en deux points diamétralement opposée sur la face supérieure horizontale du plateau 24 tournant, d'une part, et sur une face supérieure horizontale du rail 36 fixe, d'autre part, le corps 14 des préformes 12 étant sous le niveau du plateau 24 tournant à travers ledit interstice 34. Les deux points d'appui sont alignés radialement. Le rail 36 fixe permet de soutenir les préformes 12 de manière stable.

Ainsi, lors d'une troisième étape de redressement, comme représenté aux figures 8 et 9, les préformes 12 alignées lors de la deuxième étape arrivent depuis le premier secteur 20A d'alignement en étant alignées en une file le long de la rambarde 28, leur axe "A" principal orienté tangentiellement. Les préformes 12 alignées sont disposées aléatoirement col 16 en amont ou col 16 en aval sans que cela n'ait d'influence sur leur redressement.

Lorsque le corps 14 de chaque préforme 12 arrive au-dessus de l'interstice 34, le corps 14 commence à tomber, comme représenté aux figures 10 et 11, faisant ainsi basculer la préforme 12 autour d'un axe radial passant par les points d'appui de la face 18 de support, dans le cas présent de la collerette, de la préforme 12. Le basculement se poursuit jusqu'à ce que l'axe "A" principal de la préforme 12 soit vertical, éventuellement après quelques balancement autour de l'axe radial. La préforme 12 est alors soutenues par sa face 18 de support reposant conjointement sur le rail 36 fixe et sur le plateau 24 tournant, comme indiqué aux figures 12 et 13. La préforme 12 est ainsi redressée, col 16 en haut. Une préforme 12 ainsi redressée est guidée extérieurement par le rail 36 fixe de la rambarde 28, et elle est guidée intérieurement par le bord 25 périphérique du plateau 24 tournant.

Les préformes 12 ainsi redressées sont entraînées en rotation autour de leur axe principal par frottement contre le bord 25 externe du plateau 24. Les préformes 12 sont ainsi déplacées autour du bol 20 dans le sens de rotation du plateau 24 tournant par roulement contre la rambarde 28 périphérique.

Les préformes 12 redressées et alignées sont ainsi acheminées vers le troisième secteur 20C de triage dans lequel des préformes 12 mal alignées sont réexpédiées directement vers le premier secteur 20A d'alignement par différents moyens de triage telles que des roues démêleuses 40, 42 et un déflecteur 44.

Les moyens de triage permettent d'éjecter activement des préformes 12 incorrectement alignées vers le secteur 20A angulaire d'alignement pour permettre leur retour direct dans le flux des préformes 12 arrivant en vrac par le déversoir 30. L'adverbe "activement" signifie que les moyens de triage sont aptes à fournir une impulsion aux préformes 12 non alignées pour retourner rapidement vers le premier secteur 20A angulaire.

Les préformes 12 incorrectement alignées peuvent être des préformes 12 non alignées. Une préforme 12 non alignée est une préforme 12 couchées sur le plateau 24 tournant et appuyées radialement contre les cols 16 des préformes 12 correctement alignées et redressées. Ces préformes 12 non alignées présentent ainsi au moins une partie fait saillie radialement vers le centre du plateau 24 tournant par rapport aux cols 16 des préformes 12 correctement alignées.

Une préformes 12 incorrectement alignée peut aussi être une préforme 12 emboîtée dans une préforme 12 correctement alignée qui défile ainsi parmi les préformes 12 correctement alignées.

Les moyens de triage sont par exemple formés par des roues 40, 42 à palettes (non représentées) dite "roues démêleuses principales" qui tournent dans le bol 20, au-dessus du plateau 24 tournant autour d'un axe vertical.

Les préformes 12 ainsi alignées, redressées puis triées sortent en file par le passage 32 de sortie ménagé dans la rambarde 28 du bol 20 de centrifugeuse. Elles sont alors prises en charge par un convoyeur 22 de sortie.

Du fait de l'éjection de préformes 12 incorrectement positionnées, les préformes 12 ne sortent pas du dispositif 10 de redressement et d'alignement de manière constante. Ainsi, la file de préformes 12 sortantes présente des trous aux endroits où des préformes 12 ont été éjectées. Or, les stations de traitement disposées en aval nécessitent une alimentation régulière et constante en préformes 12. Il n'est donc pas possible d'alimenter directement la station de traitement suivante, par exemple la station de chauffage. On prévoit en conséquence la possibilité d'accumuler temporairement les préformes 12 dans une file d'accumulation pour permettre l'alimentation en continue et régulière de la station de traitement suivante.

A cet effet, le convoyeur 22 de sortie est ici un convoyeur 22 à brosses. Un tel convoyeur 22 à brosses est décrit en détail dans le document FR 3.028.254 A1 auquel on se reportera.

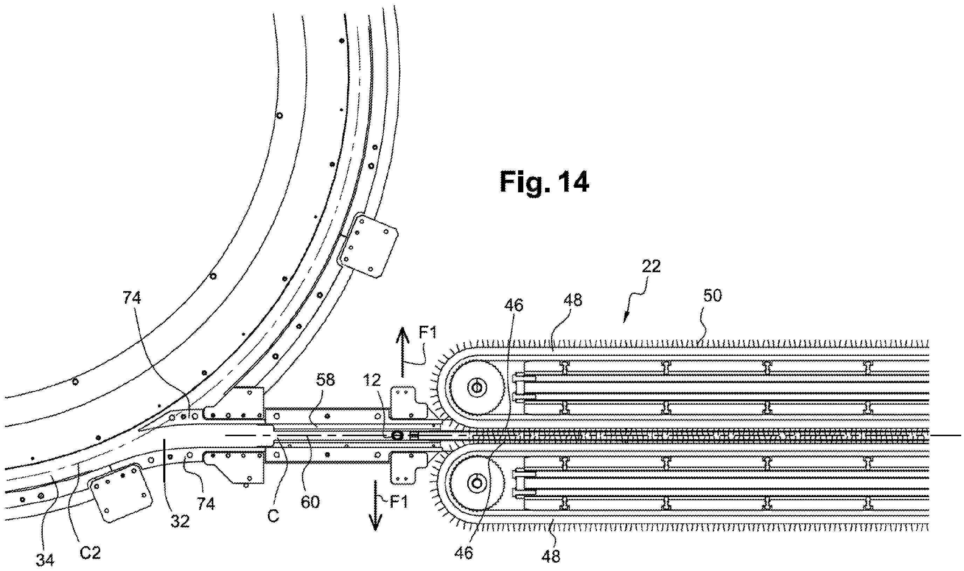

Comme cela est représenté à la figure 14 et selon l'invention, un tel convoyeur 22 à brosses comporte ainsi des rails 46 rectilignes de support, appelés "support 29" dans le document cité, entre lesquels le corps 14 de la préforme 12 est reçu pendant et sur lesquels repose de manière glissante la collerette 18 de la préforme 12. Deux bandes 48 sans fin, appelées "éléments 11 circulants sans fin" dans le document cité, portent sur leur face externe une série de brosses 50 qui sont aptes à venir au contact des préformes 12 pour entraîner celles-ci par frottement. Un brin tendu de chaque bande 48 s'étend au-dessous d'un des rails 46 associé.

Tant que le déplacement des préformes 12 n'est pas bloqué vers l'aval, le défilement des bandes sans fin permet de faire avancer les préformes 12 par frottement avec les brosses. Lorsque les préformes 12 arrivent en bout de convoyeur 22 à brosses, elles sont temporairement ralenties ou immobilisées en attente d'être prises en charge par un organe de préhension indexé, tel qu'une encoche ou une pince d'une roue 52 de transfert. Selon l'invention, les oréformes 12 accumulées en bout de convoyeur 22 à brosses sont alors ralenties par rapport à la vitesse des bandes 48 de brosses, les brosses 50 ployant pour glisser sur leur corps 14 sans créer de blocage du défilement des bandes 48. Ainsi, une portion d'extrémité du convoyeur 22 à brosses accueille une file 54 d'accumulation dans laquelle les préformes 12 sont tassées l'aval du convoyeur 22 à brosses.

Pour que la roue 52 de transfert soit alimentée de manière optimale, la file 54 d'accumulation de préformes 12 doit présenter constamment une longueur supérieure à un seuil critique, par exemple supérieure à 1 mètre. La pression des préformes 12 suivantes sur la dernière préforme 12 permet en effet de pousser cette dernière préforme 12 dans l'organe de préhension de la roue 52 de transfert. Or, dans certains cas, la présence de trous dans la file de préformes 12 sortant du dispositif 10 d'alignement et de redressement provoque un déficit de préformes 12 dans la file 54 d'accumulation de préformes 12.

Pour permettre de garantir à la file 54 d'accumulation d'être suffisamment longue sans augmenter la longueur du convoyeur 22 à brosses, l'invention propose de disposer un convoyeur 56 à gaz directement en amont du convoyeur 22 à brosses. Comme cela sera décrit plus en détails par la suite, un tel convoyeur 56 à gaz souffle des jets de gaz sous pression, notamment de l'air, sur les préformes 12 pour accélérer très sensiblement leur vitesse de glissement vers le convoyeur 22 à brosses. La vitesse de déplacement des préformes 12 dans le convoyeur 56 à gaz est augmentée jusqu'à être très supérieure à la vitesse de déplacement des préformes 12 dans le bol 20 de centrifugeuse et aussi très supérieure à la vitesse de déplacement des préformes 12 dans le convoyeur 22 à brosses.

Un tel convoyeur 56 à gaz permet ainsi de combler les trous dans la file de préformes 12 sortantes par accélération brutale de leur déplacement vers l'aval. Les préformes 12 sont ainsi tassées l'une contre l'autre dans le convoyeur 22 à brosses.

L'utilisation combinée du convoyeur 56 à gaz en amont du convoyeur 22 à brosses permet en outre d'obtenir un effet de synergie entre ces deux types de convoyeur. En effet, les préformes 12 poussées à grande vitesse vers le convoyeur 22 à brosses sont avantageusement ralenties, progressivement et sans risque d'endommagement, par frottement de leur corps 14 contre les brosses 50 dès qu'elle pénètre entre les bandes 48 de brosses. Chaque préforme 12 est ralentie jusqu'à ce que sa vitesse de déplacement soit synchronisée avec la vitesse de déplacement des bandes 48 de brosses. De cette manière, une préforme 12 ne risque pas d'entrer en collision à grande vitesse avec la préforme 12 qui la précède.

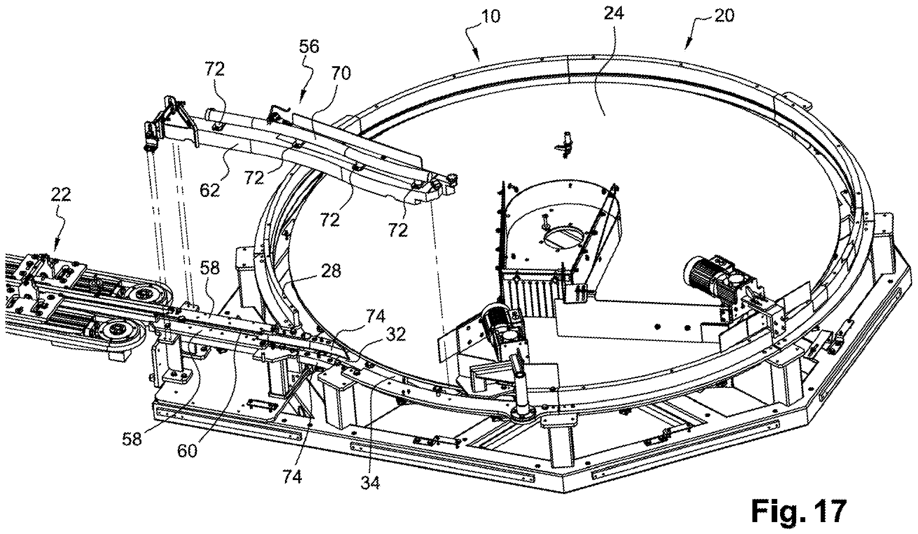

Comme cela est représenté à la figure 17, le convoyeur 56 à gaz comporte des rails 58 rectilignes de support qui sont positionnés dans le prolongement du passage 32 de sortie. Les rails 58 délimitent ainsi une rainure 60 rectiligne qui est embranchée avec l'interstice 34 périphérique du bol 20 de centrifugeuse, d'une part, et qui est prolongée par l'interstice délimité entre les rails 46 du convoyeur 22 à brosses, d'autre part. La rainure 60 détermine ainsi un trajet qui est suivi par les préformes 12 glissant librement sur les rails 58. La largeur de la rainure 60 est sensiblement identique à la largeur de l'interstice 34 périphérique du bol 20 de centrifugeuse.

Le convoyeur 56 à gaz comporte au moins une rampe 62 d'évents qui s'étend le long du trajet des préformes 12. La rampe 62 comporte un réservoir 64 allongé qui s'étend parallèlement au trajet des préformes 12. Le réservoir 64 est équipé d'une série d'évents 66 qui sont répartis régulièrement le long de la trajectoire des préformes 12. Les évents 66 sont disposés de manière à projeter un jet 68 de gaz sous pression dirigé vers l'aval et vers les préformes 12.

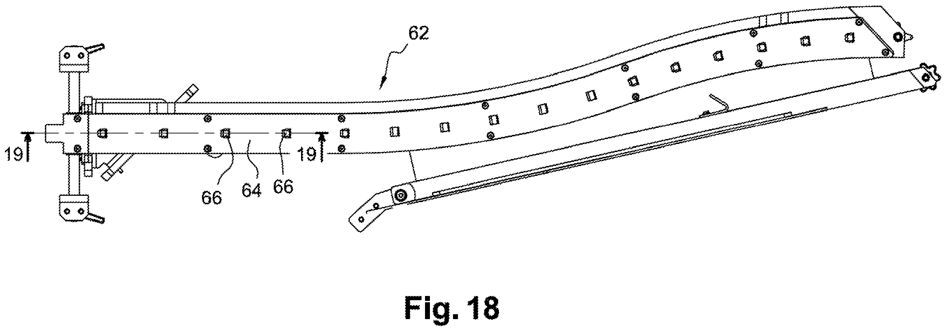

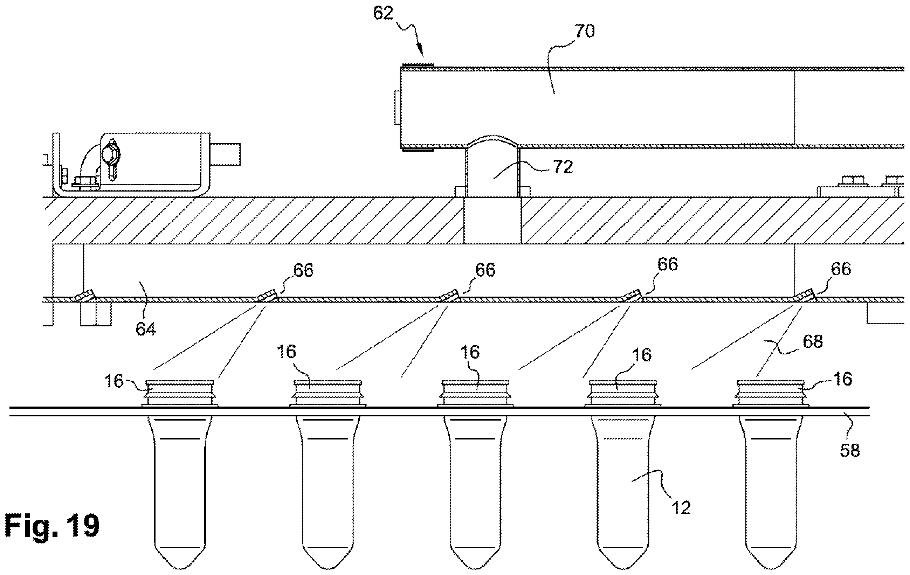

Dans le mode de réalisation représenté aux figures 17 à 19, le convoyeur 56 à gaz comporte une unique rampe 62 qui est placée au-dessus du trajet des préformes 12. Les évents 66 sont réalisés dans la face inférieure du réservoir 64 qui se trouve au droit du trajet des préformes 12, de manière à souffler des jets 68 de gaz sous pression sur les cols 16 des préformes 12 circulant dans les rails 58.

En variante non représentée, le convoyeur à gaz comporte deux rampes qui sont disposées transversalement de part et d'autre des rails, les évents soufflant sur les cols depuis chaque côté du trajet.

La rampe 62 est alimentée en gaz sous pression par un tuyau 70 qui est relié à une source (non représentée) de gaz sous pression. Le tuyau 70 serpente le long du réservoir 64 auquel il est raccordé par une pluralité de nourrices 72 réparties sur sa longueur. Ceci permet de conserver une pression homogène dans le réservoir 64 malgré la présence des évents 66.

Dans le mode de réalisation représenté aux figures, la rampe 62 d'évents s'étend le long du trajet des préformes 12 depuis une extrémité 62A amont, située en amont du passage 32 de sortie des préformes 12, jusqu'à une extrémité 62B aval située à l'entrée du convoyeur 22 à brosses. Ainsi, la rampe 62 s'étend au moins sur une portion finale en arc de cercle du trajet des préformes 12 autour du plateau 24 tournant.

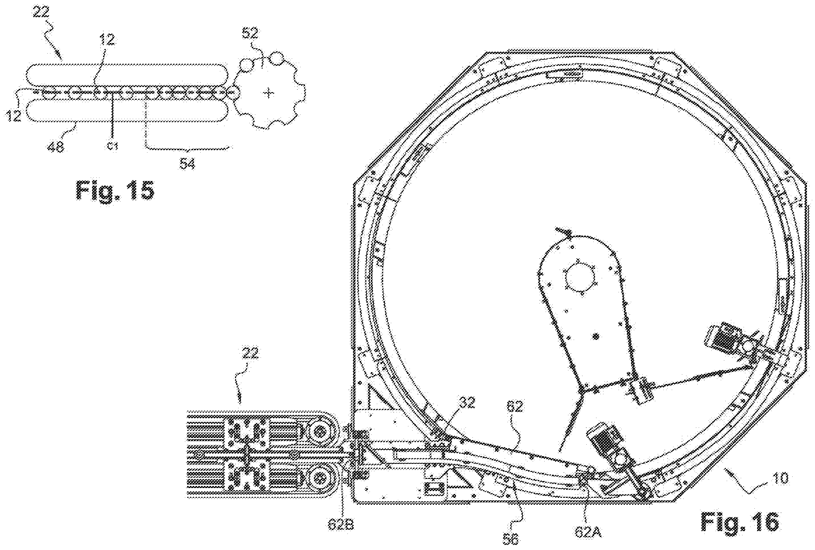

Plus particulièrement, comme cela est visible à la figure 16, l'extrémité 62A amont de la rampe 62 est placée directement en aval de la deuxième roue 42 démêleuse. En effet, après cette roue 42 démêleuse, les préformes 12 sont déjà alignées et redressées. Le positionnement d'une partie de la rampe 62 en amont du passage 32 de sortie permet ainsi d'accélérer les préformes 12 au plus tôt pour améliorer le rendement du dispositif 10 d'alignement et de redressement.

En outre, il est courant que l'installation de fabrication puisse prendre en charge plusieurs formats de préformes 12, ces préformes 12 étant traitées par lots de même format. Le diamètre des préformes 12, et notamment le diamètre maximal du corps 14 et/ou le diamètre de la collerette 18, est susceptible de varier selon le format des préformes 12. Afin d'adapter les différents convoyeurs 22 aux différents formats de préforme 12, il est prévu un mécanisme de réglage de l'écartement des rails 58, 46, aussi bien sur le convoyeur 22 à brosses que sur le convoyeur 56 à gaz.

Pour permettre la distribution correcte des préformes 12 à la roue 52 de transfert, l'axe "C1" de déplacement des préformes 12 dans les convoyeurs 22 doit être identique quelle que soit le format de la préforme 12. A cet effet, les deux rails 46, 58 des convoyeurs 22, 56 sont prévus pour être écartés symétriquement de part et d'autre d'un plan vertical médian pour régler leur écart, comme cela est indiqué par les flèches "F1".

Par ailleurs, il est aussi prévu de régler la largeur de l'interstice 34 du bol 20 de centrifugeuse en fonction du format. A cet effet, on prévoit d'ajouter ou de retirer des segments d'anneaux à la périphérie du plateau 24 tournant pour en ajuster le diamètre. La rambarde 28 et le rail 36 fixe associé demeurent fixes et inchangés quel que soit le format de préforme 12 utilisé.

Il en résulte que, contrairement aux convoyeurs 22, l'axe "C2" médian de déplacement des préformes 12 est décalé radialement à chaque changement de format.

Pour permettre de raccorder l'interstice 34 périphérique du bol 20 avec la rainure 60 du convoyeur 56 à gaz malgré ce décalage d'axe "C2" de l'interstice 34 par rapport à la rainure 60, il est prévu de faire sortir les préformes 12 légèrement après le point de tangence théorique entre la trajectoire rectiligne des rails et la trajectoire circulaire de l'interstice 34. Il est aussi prévu d'interposer des rails 74 de bifurcation qui prolongent la trajectoire des préformes 12 dans l'interstice 34 et qui sont incurvés selon une courbure opposée à celle de l'interstice 34, comme cela est illustré à la figure 14. Les rails 74 de bifurcation passent à travers le passage 32 de sortie.

Les rails de bifurcation sont susceptibles d'être remplacés pour adapter le rayon de courbure et l'écartement des rails 74 de bifurcation en fonction de la dimension des préformes 12 sortantes. La modification du rayon de courbure permet notamment de rattraper le décalage d'axe "C2" de déplacement entre l'interstice 34 périphérique et la rainure 60 rectiligne des rails.

Avantageusement, le rayon de courbure des rails 74 de bifurcation est suffisamment grand pour que les préformes 12 poussées par la rampe 62 d'évents ne soient pas ralenties par un virage trop serré.

L'agencement réalisé selon les enseignements de l'invention permet ainsi de garantir que la file 54 d'accumulation de préformes 12 dans le convoyeur 22 à brosses conserve une longueur suffisante pour permettre l'alimentation régulière et continue de la roue 52 de transfert suivante, tout en conservant un convoyeur 22 à brosses de longueur réduite. L'ensemble formé par le dispositif 10 d'alignement et de redressement et par les convoyeurs 22, 56 agencés en sortie est ainsi avantageusement compact tout en présentant un rendement optimal.

## Revendications

1. Agencement pour tasser des préformes (12) en file en aval d'une sortie d'un dispositif (10) de redressement et d'alignement des préformes, lesquelles préformes sont en matériau thermoplastique, comportent un corps (14) et une collerette (18) et sont destinées à être conformées en récipient final par une station de formage, comportant un convoyeur (56) à gaz et un convoyeur de sortie constitué par un convoyeur (22) à brosses comportant des rails (46) rectilignes de support entre lesquels le corps (14) des préformes (12) peut être reçu et sur lesquels peut reposer de manière glissante la collerette (18), le convoyeur (22) à brosse comprenant deux bandes (48) sans fin qui comportent sur leur surfaces externe une série de brosses (50) aptes à venir au contact des préformes (12) pour entrainer celles-ci par frottement, et aptes à ployer pour glisser sur le corps (14) des préformes (12) sans créer de blocage du défilement des bandes (48) sans fin **caractérisé en ce que** le convoyeur (56) à gaz est disposé directement en amont du convoyeur (22) à brosses, agencé pour souffler des jets (68) de gaz sous pression sur les préformes dans le convoyeur à gaz pour accélérer le glissement des préformes (12) vers le convoyeur (22) à brosses.

2. Agencement selon la revendication précédente, **caractérisé en ce que** le dispositif (10) de redressement et d'alignement comporte un bol (20) de centrifugeuse dans lequel les préformes (12) redressées et alignées sont reçues suspendues dans un interstice (34) délimité entre la périphérie d'un plateau (24) tournant et une rambarde (28) extérieure et le long duquel elles se déplacent librement, les préformes (12) sortant par un passage (32) de sortie réalisé dans la rambarde (28).

3. Agencement selon la revendication précédente, **caractérisé en ce que** le convoyeur (56) à gaz comporte des rails (58) rectilignes agencés dans le prolongement du passage (32) de sortie et jusqu'au convoyeur (22) à brosses entre lesquels les préformes (12) sont reçues glissantes, et il comporte une rampe (62) d'évents (66) dont chacun projette un jet (68) de gaz vers des préformes (12) portées glissantes pour les pousser vers le convoyeur (22) à brosses.

4. Agencement selon la revendication précédente, **caractérisé en ce que** la rampe (62) d'évents s'étend au moins en partie sur une portion finale en arc de cercle du trajet des préformes (12) autour du plateau (24) pour pousser les préformes (12) vers le passage (32) de sortie.

5. Agencement selon la revendication précédente, **caractérisé en ce que** l'écartement des rails (58) rectilignes du convoyeur (56) à gaz est susceptible d'être réglés en fonction de la dimension des préformes (12).

6. Agencement selon la revendication précédente, **caractérisé en ce que** les rails (58) rectilignes sont écartés symétriquement par rapport à un axe (C1) vertical médian.

7. Agencement selon l'une quelconque des revendications précédentes, **caractérisé en ce que** la largeur de l'interstice (34) entre la périphérie du plateau (24) tournant et la rambarde (28) est susceptible d'être réglé par modification du diamètre du plateau (24) tournant.

8. Agencement selon la revendication précédente prise en combinaison avec la revendication 6, **caractérisé en ce qu'**il comporte des rails (74) de bifurcation qui raccordent l'interstice (34) du dispositif d'alignement et de redressement avec les rails (58) rectilignes à travers le passage (32) de sortie, les rails (74) de bifurcation étant incurvés selon une courbure opposée à celle de ladite portion finale.

9. Agencement selon la revendication précédente, **caractérisé en ce que** les rails (74) de bifurcation sont susceptibles d'être remplacés pour adapter leur rayon de courbure et leur écartement en fonction de la dimension des préformes (12) sortantes.

## Patentansprüche

1. Anordnung zum Stauen von Vorformlingen (12) in Reihe stromabwärts hinter einem Ausgang einer Vorrichtung (10) zum Aufrichten und Ausrichten der Vorformlinge, wobei die Vorformlinge aus thermoplastischem Werkstoff sind, einen Körper (14) und einen Kragen (18) aufweisen und dazu bestimmt sind, von einer Formungsstation zu einem endgültigen Behälter ausgebildet zu werden,
die einen Gasförderer (56) und einen Ausgangsförderer bestehend aus einem Bürstenförderer (22) aufweist, der geradlinige Stützschienen (46) aufweist, zwischen denen der Körper (14) der Vorformlinge (12) empfangen werden kann und auf denen der Kragen (18) gleitend aufliegen kann, wobei der Bürstenförderer (22) zwei Endlosbänder (48) enthält, die an ihrer Außenfläche eine Reihe von Bürsten (50) aufweisen, die mit den Vorformlingen (12) in Kontakt kommen können, um diese durch Reibung anzutreiben, und die sich biegen können, um auf dem Körper (14) der Vorformlinge (12) zu gleiten, ohne eine Blockierung des Vorbeilaufs der Endlosbänder (48) zu erzeugen,
**dadurch gekennzeichnet, dass** der Gasförderer (56) direkt stromaufwärts vor dem Bürstenförderer (22) angeordnet ist, eingerichtet, um Druckgasstrahlen (68) auf die Vorformlinge im Gasförderer zu blasen, um das Gleiten der Vorformlinge (12) zum Bürstenförderer (22) zu beschleunigen.

2. Anordnung nach dem vorhergehenden Anspruch, **dadurch gekennzeichnet, dass** die Aufricht- und Ausrichtvorrichtung (10) eine Zentrifugenschale (20) aufweist, in der die aufgerichteten und ausgerichteten Vorformlinge (12) aufgehängt in einem Spalt (34) empfangen werden, der zwischen dem Umfang eines Drehtellers (24) und einer äußeren Reling (28) begrenzt ist und entlang dessen sie sich frei verschieben, wobei die Vorformlinge (12) über einen in der Reling (28) hergestellten Austrittsdurchlass (32) austreten.

3. Anordnung nach dem vorhergehenden Anspruch, **dadurch gekennzeichnet, dass** der Gasförderer (56) geradlinige Schienen (58) aufweist, die in der Verlängerung des Austrittsdurchlasses (32) und bis zum Bürstenförderer (22) angeordnet sind, zwischen denen die Vorformlinge (12) gleitend empfangen werden, und dass sie eine Rampe (62) von Luftlöchern (66) aufweist, von denen jedes einen Gasstrahl (68) zu gleitend getragenen Vorformlingen (12) projiziert, um sie zum Bürstenförderer (22) zu schieben.

4. Anordnung nach dem vorhergehenden Anspruch, **dadurch gekennzeichnet, dass** die Rampe (62) von Luftlöchern sich zumindest zum Teil über einen kreisbogenförmigen Endabschnitt der Bahn der Vorformlinge (12) um den Teller (24) herum erstreckt, um die Vorformlinge (12) zum Austrittsdurchlass (32) zu schieben.

5. Anordnung nach dem vorhergehenden Anspruch, **dadurch gekennzeichnet, dass** der Abstand der geradlinigen Schienen (58) des Gasförderers (56) abhängig von der Abmessung der Vorformlinge (12) eingestellt werden kann.

6. Anordnung nach dem vorhergehenden Anspruch, **dadurch gekennzeichnet, dass** die geradlinigen Schienen (58) einen symmetrischen Abstand bezüglich einer senkrechten Mittelachse (C1) haben.

7. Anordnung einem der vorhergehenden Ansprüche, **dadurch gekennzeichnet, dass** die Breite des Spalts (34) zwischen dem Umfang des Drehtellers (24) und der Reling (28) durch Änderung des Durchmessers des Drehtellers (24) eingestellt werden kann.

8. Anordnung nach dem vorhergehenden Anspruch in Kombination mit Anspruch 6, **dadurch gekennzeichnet, dass** sie Abzweigschienen (74) aufweist, die den Spalt (34) der Ausricht- und Aufrichtvorrichtung mit den geradlinigen Schienen (58) über den Austrittsdurchlass (32) verbinden, wobei die Abzweigschienen (74) gemäß einer Krümmung entgegengesetzt zu derjenigen des Endabschnitts gekrümmt sind.

9. Anordnung nach dem vorhergehenden Anspruch, **dadurch gekennzeichnet, dass** die Abzweigschienen (74) ausgetauscht werden können, um ihren Krümmungsradius und ihren Abstand abhängig von der Abmessung der austretenden Vorformlinge (12) anzupassen.

## Claims

1. Arrangement for pressing together queueing preforms (12) downstream of an outlet of a device (10) for straightening and aligning the preforms, which preforms are made of a thermoplastic material, comprise a body (14) and a collar (18) and are intended to be ultimately shaped into a container by a forming station, comprising a gas conveyor (56) and an outlet conveyor consisting of a brush conveyor (22) comprising straight support bars (46) between which the body (14) of the preforms (12) can be received and on which the collar (18) can rest so as to be able to slide, the brush conveyor (22) comprising two continuous belts (48) which comprise, on the outer surfaces, a set of brushes (50) that are designed to come into contact with the preforms (12) so as to move them along by friction, and are able to bend so as to slide on the body (14) of the preforms (12) without impeding the motion of the continuous belts (48), **characterized in that** the gas conveyor (56) is arranged directly upstream of the brush conveyor (22), and is arranged to blow jets (68) of pressurised gas onto the preforms in the gas conveyor so as to accelerate the sliding of the preforms (12) towards the brush conveyor (22).

2. Arrangement according to the preceding claim, **characterized in that** the straightening and aligning device (10) comprises a centrifuge bowl (20) in which the straightened and aligned preforms (12) are received suspended in a gap (34) delimited between the periphery of a rotating plate (24) and an outer guard-bar (28) along which they move freely, the preforms (12) leaving via an outlet passage (32) created in the guard-bar (28).

3. Arrangement according to the preceding claim, **characterized in that** the gas conveyor comprises straight bars (58) arranged in the extension of the outlet passage (32) and as far as the brush conveyor (22), between which the preforms (12) are received so as to be able to slide, and it comprises a rail (62) of vents (66), each of which sends a jet (68) of gas towards the preforms (12) that are borne in a sliding manner so as to push them towards the brush conveyor (22).

4. Arrangement according to the preceding claim, **characterized in that** the rail (62) of vents extends at least in part over a final portion in the shape of an arc of a circle of the path of the preforms (12) around the plate (24) so as to push the preforms (12) towards the outlet passage (32).

5. Arrangement according to the preceding claim, **characterized in that** the spacing of the straight bars (58) of the gas conveyor (56) can be adjusted according to the size of the preforms (12).

6. Arrangement according to the preceding claim, **characterized in that** the straight bars (58) are spaced apart symmetrically with respect to a median vertical axis (C1).

7. Arrangement according to any one of the preceding claims, **characterized in that** the width of the gap (34) between the periphery of the rotating plate (24) and the guard-bar (28) can be adjusted by changing the diameter of the rotating plate (24).

8. Arrangement according to the preceding claim considered together with Claim 6, **characterized in that** it comprises bifurcation bars (74) that connect the gap (34) of the aligning and straightening device to the straight bars (58) via the outlet passage (32), the bifurcation bars (74) being curved according to a curvature opposite that of said final portion.

9. Arrangement according to the preceding claim, **characterized in that** the bifurcation bars (74) can be replaced so as to adapt their radius of curvature and their spacing according to the size of the exiting preforms (12).
